**Europäisches Patentamt**

**European Patent Office**

**Office européen des brevets**

(19)

(11) Veröffentlichungsnummer: **0 031 870**
**A2**

# EUROPÄISCHE PATENTANMELDUNG

(12)

(21) Anmeldenummer: **80105157.4**

(22) Anmeldetag: **29.08.80**

(51) Int. Cl.³: **G 01 K 11/16**

(30) Priorität: **13.12.79 DE 2950047**

(43) Veröffentlichungstag der Anmeldung:
**15.07.81 Patentblatt 81/28**

(84) Benannte Vertragsstaaten:
**CH FR GB IT LI NL**

(71) Anmelder: **ERNO Raumfahrttechnik Gesellschaft mit beschränkter Haftung**
**Hünefeldstrasse 1-5**
**D-2800 Bremen(DE)**

(72) Erfinder: **Schilf, Lothar**
**Am Freibad 9**
**D-2807 Achim(DE)**

(72) Erfinder: **Giese, Ingo Harald**
**Borchsholtstrasse 20a**
**D-2800 Bremen 70(DE)**

(74) Vertreter: **Bischof, Hans-Jochen**
**Industriestrasse 20**
**D-2800 Bremen(DE)**

(54) **Anordnung zur messtechnischen Erfassung kleinster Temperaturdifferenzen im Mikrobereich.**

(57) Die Erfindung bezieht sich auf eine Anordnung zur meßtechnischen Erfassung kleinster Temperaturdifferenzen im Mikrobereich mittels eines an sich bekannten Auf- und/oder Durchlichtmikroskops, das mit einem Heiztisch zur Aufnahme des Objektträgers ausgerüstet ist. Dieser Objektträger enthält eine Flüssigkristallschicht, die vorzugsweise durch eine das Objekt tragende Glasplatte abgedeckt ist, die eine Dicke von nur wenigen Mikrometern aufweist. Eine zweite Platte auf der anderen Seite der Flüssigkristallschicht ist beiderseits mit einer reflexmindernden Schicht versehen. Die Rückseite weist zweckmäßig eine undurchsichtige vorzugsweise wärmeabsorbierende Schicht auf, die im Zusammenwirken mit zusätzlichen Einrichtungen am Mikroskop selbst zur Feinstregulierung der Temperatur des Objektträgers dient. Ein Regelkreis zur Temperaturfeinstregulierung besteht aus der Flüssigkristallschicht selbst als Sensor einem Lichtdetektor zur Aufnahme des von dem Objektträger bzw. der Flüssigkristallschicht reflektierten Lichtes, einem vor dem Lichtdetektor angeordneten Kantenfilter, einer im Durchlichtbeleuchtungsstrahlengang angeordneten verstellbaren Blende und einer von dem Lichtdetektor angesteuerten, die verstellbare Blende ansteuernden Regeleinrichtung.

FIG. 2

Croydon Printing Company Ltd.

7824E33                                 Bremen, den 11. Dezember 1979
                                        Mei/ka


                E R N O  —  Raumfahrttechnik
                Gesellschaft mit beschränkter Haftung


        ----------------------------------------------------

Anordnung zur meßtechnischen Erfassung kleinster Temperatur-
                differenzen im Mikrobereich

        ----------------------------------------------------


Die Erfindung betrifft eine Anordnung zur meßtechnischen Erfassung
kleinster Temperaturdifferenzen im Mikrobereich unter Verwendung
eines an sich bekannten Auf- und/oder Durchlichtmikroskops, das
vorzugsweise mit einem ebenfalls an sich bekannten Heiztisch zur
Konstanthaltung der Temperatur des Objektträgers ausgerüstet ist.

Es ist bekannt, zu thermographischen Untersuchungen im Mikrobereich Infrarotmikroskope zu verwenden, deren Temperaturauflösung
bei etwa 0,1 Grad C und deren räumliche Auflösung bei etwa
15 Mikrometern liegt.

Andererseits ist auch bekannt, daß Flüssigkristalle mit helixartiger Molekülanordnung eine temperaturabhängige selektive Reflexion
aufweisen, bei denen ein Temperaturauflösungsvermögen von weniger
als 1/100 Grad C bei einer räumlichen Auflösung von etwa 200 An - ström-Einheiten nachgewiesen ist. Dazu kommt noch ein zeitliches Auflösungsvermögen von etwa 33 Zyklen/sec.

Aufgabe der Erfindung ist es, diese speziellen Eigenschaften von Flüssigkristallen für thermographische Untersuchungen im Mikrobereich nutzbar zu machen.

Erfindungsgemäß ist das bei Verwendung eines an sich bekannten Untersuchungsmikroskops mit Auf- und/oder Durchlichtbeleuchtung, das vorzugsweise mit einem ebenfalls an sich bekannten Heiztisch zur Konstanthaltung der Temperatur des Objektträgers ausgerüstet ist, dadurch möglich, daß ein spezieller Objektträger verwendet ist, der aus zwei transparenten Platten besteht, zwischen denen eine dünne Flüssigkristallschicht eingeschlossen ist und von denen die das Objekt tragende Platte eine Dicke von wenigen Mikrometern aufweist, so, daß ein guter Wärmekontakt zwischen dem zu untersuchenden Objekt und der Flüssigkristallschicht herstellbar ist. Ein solcher Objektträger ist vorzugsweise mit den in den Ansprüchen 2 bis 5 angegebenen zusätzlichen Merkmalen ausgestattet. Es ist vorteilhaft, das Untersuchungsmikroskop selbst ebenfalls mit einigen ergänzenden Bausteinen auszurüsten, wie das in den Ansprüchen 6 bis 7 angegeben ist.

Mit einer Anordnung nach der Erfindung lassen sich in einem zu untersuchenden Objekt Temperaturdifferenzen von weniger als 1/100 Grad C in Abständen von weniger als einem $\mu$ -Meter nach weisen, je nach den speziellen Eigenschaften des in dem Objektträger verwendeten Flüssigkristalls. Das bedeutet, daß gegenüber den bisher bekannten Methoden eine Verbesserung sowohl hinsichtlich der Temperaturdifferenzen als auch hinsichtlich der räumlichen Auflösung von jeweils mehr als einer Größenordnung möglich ist. Darüberhinaus lassen sich auch zeitliche Temperaturänderungen in Größenordnungen feststellen, die bisher nicht nachweisbar waren. Von besonderer Bedeutung ist die mit der erfindungsgemäßen Anordnung mögliche meßtechnische Erfassung kleinster Temperaturdifferenzen im Mikrobereich für die Mikrobiologie, und hier insbesondere im medizinischen Bereich. Die Anordnung ermöglicht z.B. die Untersuchung von lebenden Zellen ohne die übliche Einfärbung, die im allgemeinen mit einer Abtötung der Zellen verbunden ist, wenn die in den Zellen zu untersuchenden Vorgänge temperaturabhängig sind. Das gilt insbesondere bei der Untersuchung von krebsverdächtigen Zellen, von denen bekannt ist, daß die in ihnen ablaufenden Stoffwechselvorgänge charakteristische Abweichungen von dem Stoffwechsel in den gesunden Zellen aufweisen. Dabei spielt folgende Grundsatzüberlegung die entscheidende Rolle:

Der Gesamt-Energieumsatz eines Organismus spaltet sich auf in den Ruhe-Energieumsatz und den Bewegungs-Energieumsatz. Die benötigte Energie wird aus biochemischen Prozessen in den Zellen des Organismus gewonnen. Ein Teil der bei diesen biochemischen Prozessen entstehenden Energie wird zur Bildung neuer Zellbestandteile und Zellen verwendet und ein anderer großer Teil wird in Form von Wärme an die Umgebung bzw. den Organismus abgegeben. Wenn es gelingt, diesen Anteil mit einem geeigneten Temperaturdetektor festzustellen, dann lassen sich Rückschlüsse auf die biochemischen Vorgänge in der Zelle selbst ziehen. Der für diese Untersuchungen geeignete Detektor ist der erfindungsgemäße Objektträger, bei dem die selektive Reflexion der verwendeten cholesterinischen Flüssigkristalle in Abhängigkeit von ihrer örtlichen Temperatur zu entsprechenden sichtbaren Lichtänderungen führt. Unbedingtes Erforderung dazu ist jedoch, daß die mittlere Temperatur an der Oberfläche des als Detektor dienenden Objekt-trägers und damit des zu untersuchenden Objekts auf das genaueste stabilisiert ist, so daß sich ein der Aktivität der Zellen entsprechendes Temperaturprofil ausbilden kann und durch die selective Reflexion angezeigt wird. Durch die an sich bekannte Ausrüstung des Untersuchungsmikroskops mit fotografischen Registriereinrichtungen wie Kameras, Laufbildkameras oder Fernsehkameras, lassen sich Rückschlüsse auf den Energieumsatz und damit auf den Stoffwechsel der zu untersuchenden Objekte ziehen. Änderungen in der Stoffwechselaktivität können über längere Zeiträume mit entsprechenden Bildfolgen verfolgt werden.

Eine solche Anordnung läßt sich selbstverständlich auch zu Reihenuntersuchungen bei der Krebsvorsorge verwenden.

In den beigefügten Zeichnungen ist eine erfindungsgemäße Anordnung und ein zugehöriger Objektträger schematisch dargestellt, und zwar zeigt

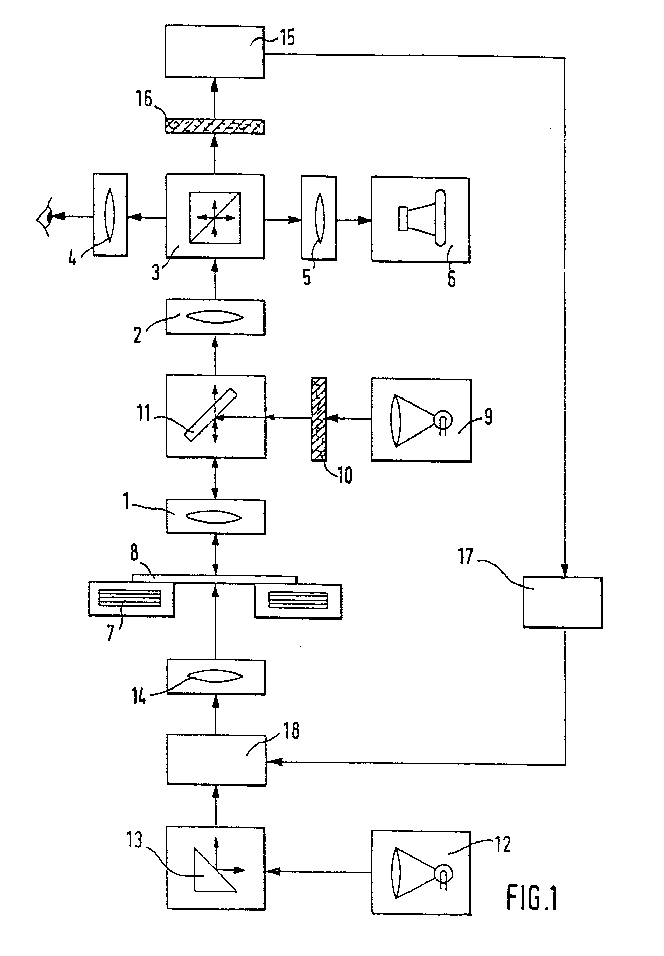

Figur 1          schematisch ein erfindungsgemäß ausgerüstetes Untersuchungsmikroskop,

Figur 2          einen Schnitt durch einen erfindungsgemäßen Objektträger und die

Fig. 3a bis 3d   schematisch ein an sich bekanntes Herstellungsverfahren für einen Objektträger nach der Erfindung.

Das Untersuchungsmikroskop besteht aus dem Objektiv 1, der Tubuslinse 2, dem Strahlenteiler 3 und dem Okular 4. Gegenüber dem Okular 4 ist eine fotografische Registriereinrichtung mit dem Kameraobjektiv 5 und der Kamera 6 vorgesehen. Das Miskroskop besitzt ferner einen Heiztisch 7, auf dem der Objektträger 8 ruht. An Beleuchtungseinrichtungen ist eine Auflichtbeleuchtung 9 mit einem Wärmeschutzfilter 10 und dem teildurchlässigen Reflektor 11, sowie eine Durchlichtbeleuchtung 12 mit einem Umlenkspiegel 13 und dem Kondensor 14 vorgesehen. Über dem Strahlenteiler 3 ist ein Lichtdetektor 15 mit dem vorgeschalteten Kantenfilter 16 angeordnet. Der Lichtdetektor 15 ist über eine Regeleinrichtung 17 mit einer verstellbaren Blende 18, die im Durchlichtbeleuchtungsstrahlengang angeordnet ist, verbunden.

Die Wirkungsweise des Lichtdetektors 15, des Reglers 17 und der verstellbaren Blende 18 ist folgende: Der Objektträger 8, der auf dem Heiztisch 7 ruht, wird in an sich bekannter Weise mit einer Genauigkeit von etwa 0,1 Grad C in seiner Temperatur konstant gehalten. Auf Temperaturänderungen des Objektträgers reagiert der in dem Objektträger vorhandene Flüssigkristall durch Änderung seines Reflexionsvermögens. Bei aufgeschalteter Auflichtbeleuchtung 9 führt das dazu, daß das von dem Lichtdetektor 15 über das Kantenfilter 16 aufgenommene Licht entsprechend den Temperaturänderungen des Objektträgers 8 den gleichen Änderungen unterworfen ist. Ist gleichzeitig die Durchlichtbeleuchtung 12 eingeschaltet, dann wird je nach Einstellung der Blende 18 eine Beleuchtung der undurchsichtigen Rückseite des Objektträgers 8 erfolgen, womit infolge der Absorptionsfähigkeit der Rückseite des Objektträgers 8 eine mehr oder minder starke Aufheizung des Objektträger 8 erfolgen. Über die von dem Lichtdetektor 15 angesteuerte Regeleinrichtung 17 erfolgt nun eine Steuerung der Blende 18 derart, daß die Temperatur des Objektträgers 8 auf weniger als 1/100 Grad C konstant gehalten wird. Diese außerordentlich genaue Temperaturkonstanthaltung des Objektträgers 8 ist erforderlich, um örtliche Temperaturdifferenzen eines auf dem Objektträger 8 ruhenden zu untersuchenden Objekts mit der gewünschten Genauigkeit feststellen zu können. Entscheidend wichtig dabei bleibt ein guter Wärmekontakt zwischen dem zu untersuchenden Objekt und der Flüssigkristallschicht im Objektträger 8.

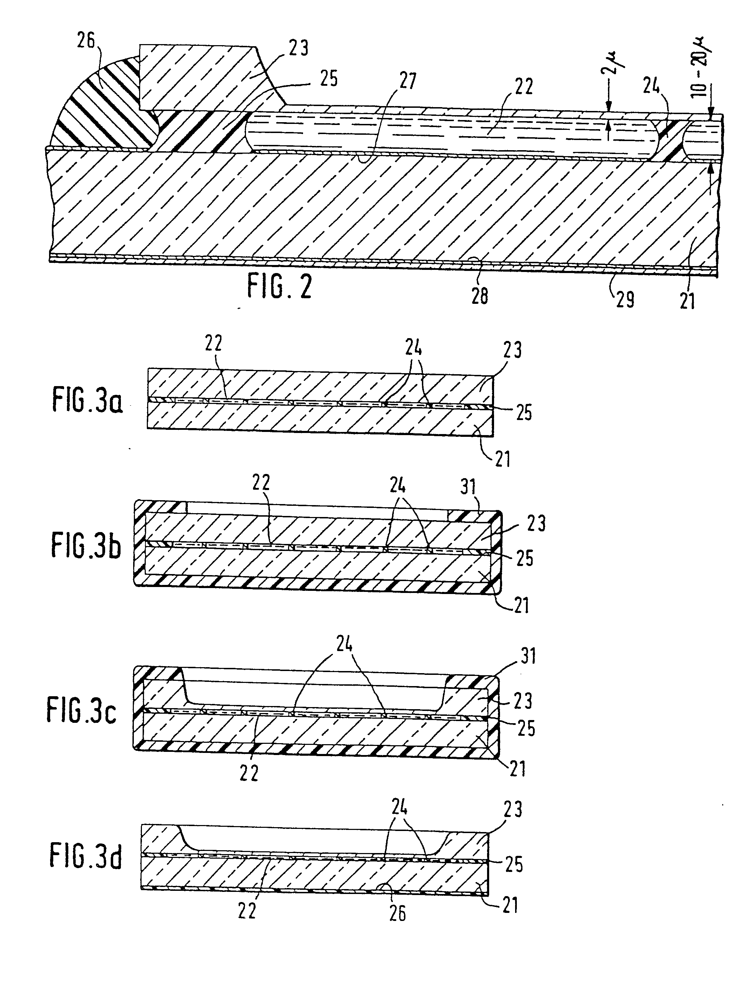

In der Figur 2 ist ein derartiger Objektträger im Schnitt dargestellt. Dieser Objektträger besteht aus der (transparenten) Trägerplatte 21, der Flüssigkristallschicht 22 und der Deckplatte 23. Die Trägerplatte 21 und die Deckplatte 23 sind durch Abstandshalter 24 und eine Randabdeckung 25 voneinander getrennt. Diese Abstandshalter und die Randabdeckung können in an sich bekannter Weise durch Aufdampfen hergestellt sein. Sie sind erforderlich, um die Dicke der Flüssigkristallschicht 22 über die gesamte Objektträgerfläche hin konstant zu halten. Die Trennfuge zwischen der Trägerplatte 21 und der Deckplatte 23 ist am Rand durch eine geeignete Verschlußmasse 26 abgedichtet. Die Dicke der Trägerplatte liegt bei etwa 1 mm, während die Flüssigkristallschicht etwa 10 bis 20 Mikrometer und die Deckplatte im Bereich der Flüssigkristallschicht etwa 2 Mikrometer beträgt. Um die Deckplatte 23 auf diese außerordentlich geringe Dicke zu bringen, ist es zweckmäßig, die Deckplatte 23 mittels eines an sich bekannten Ätzverfahrens zu behandeln. Beide Seiten der Trägerplatte 21 sind mit reflexmindernden Schichten 27 bzw. 28 belegt. Auf die Rückseite des Objektträgers, d.h. also, auf die reflexmindernde Schicht 28 ist zusätzlich eine lichtundurchlässige Schicht 29 aufgebracht, in der das von dieser Schicht absorbierte Licht in Wärme umgesetzt wird.

In den Figuren 3a bis d ist schematisch die Herstellung der dünnen Deckplatte 23 des Objektträgers dargestellt, Dabei sind in diesen Figuren die gleichen Bezugszeichen wie in der Figur 2 verwendet worden, soweit eine Übereinstimmung besteht.

Die Figur 3a zeigt den Objektträger nach dem Zusammenfügen der Trägerplatte 21 mit der Deckplatte 23, wobei diese beiden Platten durch die Randabdeckung 25 und die Abstandshalter 24 in einem vorgegebenen Abstand gehalten werden. Der Zwischenraum ist mit der Flüssigkristallschicht 22 ausgefüllt. Der Objektträger wird in diesem Zustand mit einer Abdecklackschicht 31 versehen, die lediglich den abzuätzenden Teil der Deckplatte 23 freiläßt, alle übrigen Teile jedoch vor dem Ätzmittel schützt. In bekannter Weise wird dann beispielsweise mit einem fluorhaltigen Ätzmittel die Deckplatte in ihrem nicht geschützten Teil soweit abgeätzt, daß nur noch die gewünschte Restdicke von etwa zwei Mikrometern erhalten bleibt. Um eine gleichmäßige Ätzung zu erreichen, ist es zweckmäßig, eine konstante Relativbewegung zwischen Objektträger und Ätzflüssigkeit durchzuführen. Nach erfolgter Abätzung (siehe Figur 3c) wird der Schutzlack entfernt und gegebenenfalls auf der Rückseite des Objektträgers noch die reflexmindernde Schicht 28 bzw. die lichtundurchlässige Schicht 29 aufgebracht.

Mit einem derartigen Objektträger ist es möglich, die erforderliche Temperaturkonstanz des Objekts bis zu etwa 1/1000 Grad C zu gewährleisten. Diese Temperaturstabilisierung wird folgendermaßen erreicht:

Temperaturfühler der Gesamteinrichtung ist der Flüssigkristall selbst. Dabei wird die mittlere Temperatur des gesamten im Gesichtsfeld liegenden Objektbereiches erfaßt. Das von der Auflichtbeleuchtung 9 über den Reflektor 11 auf den Objektträger 8 geworfene Licht wird von der Flüssigkristallschicht in dem Objektträger 8 selektiv reflektiert und über das Objektiv 1, die

Tubuslinse 2 und den Strahlenteiler 3 dem Lichtdetektor 15 zugeführt. Vor diesem Lichtdetektor 15 befindet sich das Kantenfilter 16, das so ausgewählt ist, daß die steile Absorptionskante in den empfindlichsten Bereich des Flüssigkristalls im Objektträger 8 fällt. Die steile Flanke des Kantenfilters wird zur Regelung ausgenutzt. Temperaturänderungen in der Flüssigkristallschicht führen dann selbstverständlich zu Änderungen des von dem Lichtdetektor 15 abgegebenen Steuersignals, das über einen Regler 17 der variablen Blende 18 zugeführt wird. Diese variable Blende 18 liegt im Beleuchtungstrahlengang der Durchlichtbeleuchtung 12, deren Licht auf die Rückseite des Objektträgers 8 gelangt, die selbst mit einer undurchlässigen Schicht versehen ist. Das von dieser Schicht absorbierte Licht wird in Wärme umgesetzt, die ihrerseits wiederum die Flüssigkristallschicht beeinflußt. Die erzeugte Wärmemenge hängt nun aber von der Einstellung der variablen Blende 18 ab, die eine mechanische Blende oder eine Kombination von Polarisationsfiltern oder eine sonst bekannte Art von Lichtventil sein kann. Die in der Absorptionsschicht auf der Rückseite des Objektträgers 8 umgesetzte Energie überlagert die dem Objektträger 8 durch den Heiztisch 7 vorgegebene Temperatur, wobei die kurze Ansprechzeit der Flüssigkristalle dem Regelvorgang zugute kommt.

7824E33

Bremen, den 11. Dezember 1979
Mei/ka

ERNO — Raumfahrttechnik
Gesellschaft mit beschränkter Haftung

-------------------------------------------

P a t e n t a n s p r ü c h e

--------------------------------

1.) Anordnung zur meßtechnischen Erfassung kleinster Temperaturdifferenzen im Mikrobereich mit einem an sich bekannten
Auf- und/oder Durchlichtmiskroskop, dadurch  g e k e n n -
z e i c h n e t , daß als Objektträger ein eine Flüssigkristallschicht enthaltender Objektträger verwendet ist.

2.) Anordnung nach Anspruch 1, dadurch  g e k e n n z e i c h -
n e t , daß der Objektträger aus zwei Glasplatten besteht,
zwischen denen eine Flüssigkristallschicht eingeschlossen
ist und von denen die das Objekt tragende Glasplatte eine
Dicke von wenigen Mikrometern aufweist.

3.) Anordnung nach Anspruch 2, dadurch  g e k e n n z e i c h -
n e t , daß die das Objekt tragende Glasplatte des Objektträgers durch an sich bekannte chemische Fräsmethoden auf
eine Dicke von etwa zwei Mikrometer gebracht ist.

4.) Anordnung nach mindestens einem der Ansprüche 1 bis 3,
dadurch  g e k e n n z e i c h n e t , daß die zweite
Platte des Objektträgers auf ihren beiden Seiten mit einer
reflexmindernden Schicht versehen ist.

5.) Anordnung nach mindestens einem der Ansprüche 1 bis 4,
dadurch  g e k e n n z e i c h n e t , daß der Objektträger
auf seiner Rückseite mit einer undurchsichtigen, vorzugsweise wärmeabsorbierenden Schicht versehen ist.

6.) Anordnung nach einem der Ansprüche 1 bis 5, dadurch g e k e n n z e i c h n e t , daß sie mit einem an sich bekannten Heiztisch ausgerüstet ist und daß sie mit einer zusätzlichen Einrichtung zur Feinstregulierung der Temperatur des Objektträger versehen ist.

7.) Anordnung nach Anspruch 6 mit einem an sich bekannten Auf- und Durchlichtmikroskop mit den ebenfalls bekannten Beobachtungs- und Registriervorrichtungen, g e k e n n - z e i c h n e t durch folgende zusätzliche Merkmale:

a) einen Lichtdetektor zur Aufnahme zumindest eines Teils des von dem Objektträger reflektierten Lichtes,

b) ein vor dem Lichtdetektor angeordnetes Kantenfilter,

c) eine in Durchlichtbeleuchtung-Strahlengang angeordnete verstellbare Blende und

d) eine von dem Lichtdetektor angesteuerte und die verstellbare Blende ansteuernde Regeleinrichtung.

FIG.1

FIG. 2

FIG.3a

FIG.3b

FIG.3c

FIG.3d